# EUROPEAN PATENT SPECIFICATION

(11) **EP 3 726 189 B1**
(45) Date of publication and mention of the grant of the patent: **06.08.2025**
(21) Application number: 19169645.9
(22) Date of filing: 16.04.2019
(51) Int. Cl.: G01G 19/08, G01G 23/01, G01G 19/04, G01G 19/44

(54) **A METHOD FOR DETERMINING LOADING DATA IN CONNECTION WITH A LOAD SUPPORTED BY A TRANSPORTATION VEHICLE**
VERFAHREN ZUM BESTIMMEN VON LADEDATEN IN VERBINDUNG MIT EINER VON EINEM TRANSPORTFAHRZEUG GETRAGENEN LAST
PROCÉDÉ PERMETTANT DE DÉTERMINER DES DONNÉES DE CHARGEMENT EN RELATION AVEC UNE CHARGE SUPPORTÉE PAR UN VÉHICULE DE TRANSPORT

(43) Date of publication of application: 21.10.2020
(73) Proprietor: ALSTOM Holdings, 93400 Saint-Ouen-sur-Seine (FR)
(72) Inventor: O'SULLIVAN, James, Beeston, Nottingham NG9 4HA (GB); PARRY, Benjamin, West Bridgeford, Nottingham NG2 7PS (GB)
(74) Representative: Alatis

(56) References cited:
- GB-A- 2 563 016
- US-A1- 2012 095 626
- US-A1- 2017 200 082

## Description

### Field of the invention

The present invention pertains to the field of methods and systems for monitoring loads supported by transportation vehicles such as buses, trains, aircrafts or vessels. The invention concerns especially a method for determining loading data in connection with a load supported by a transportation vehicle.

### Background of the invention

Some safety procedures implemented by operators of public transport infrastructures imply the need of constant monitoring of the loads supported by transportations vehicles. To facilitate those tasks, computer systems using stereoscopic cameras placed at doorways for counting passengers and data generated using air pressure measurements performed by equipment operating in relation to suspension means of the transportation vehicle have been implemented. However, if one wants to determine accurate loading data, stereoscopic cameras arranged at doorways are not enough. Indeed, putting aside the failure rate of stereoscopic cameras (between 5-15%), such systems that use cameras placed only at doorways are not able to monitor the flow within a transportation vehicle, which, in the context of trains, clearly impacts the loading status (e.g. passengers' moves between cars or carriages). In addition, a major problem of relying also on data generated using equipment operating in relation to suspension means of the transportation vehicle is that such data is not always accurate and/or available in real time. In consequence, actual systems are not appropriate for accurately determining the load supported by a transportation vehicle, in particular if the transportation vehicle is a train or any vehicle in which a flow of passengers within the vehicle may occur.

A method and a system for monitoring occupancy of a seat arranged in a transportation vehicle are disclosed in GB2563016A. The system for monitoring seat occupancy in a vehicle includes a detection device, such as pressure sensor, in the vehicle, within or near the seat, and a centralized occupancy management system located outside of the vehicle. An occupancy displaying unit provides information about seat occupancy. The passenger's mobile communication device is used by the system for locating the passenger inside the transportation vehicle, by means of device detection units, such as Bluetooth beacons, and as a way of providing pertinent information to the passenger, such as an itinerary to reach a booked seat. The centralized occupancy management system transmits data for a functioning mode of the display unit.

### Summary of the invention

Accordingly, the goal of the invention is to remedy these disadvantages. Specifically, the goal of the invention is to provide a method and a system that facilitate determination of the load supported by a transportation vehicle, in particular if the transportation vehicle is a train composed of one or more cars or carriages.

These goals are achieved by a first object of the invention which concerns the method of claim 1.

The method according to the invention thus relies on several distinct data sources and may thus allow loading data in connection with a load of a transportation vehicle to be more accurately determined.

The method according to the invention uses an additional source of data, namely data generated in relation to equipment operating in relation to suspension means of the transportation vehicle, for determining even more accurately loading data in connection with a load supported by the transportation vehicle.

According to specific embodiments of the invention, said mobile device may be configured to pair with a beacon arranged in said vehicle. Accordingly, the method according to invention may consider how the load supported by the transportation vehicle is impacted by passengers present in the transportation vehicle.

According to specific embodiments of the invention, said first detection device may comprise a stereoscopic camera and/or an infrared sensor.

According to specific embodiments of the invention, said second detection may comprise a pressure sensor arranged with respect to a seat placed in said vehicle.

Another object of the invention concerns a system as claimed in claim 5.

According to specific embodiments of the invention, the system may comprise at least one computer and a data storage medium, in which at least one program for carrying out steps of the method carried out by the system is stored.

Another object of the invention concerns a computer program comprising instructions for carrying out the steps of a method as described above.

Another object of the invention concerns a medium which can be used in a computer and on which a program as described above is recorded.

### Brief description of the drawings

Practicable embodiments of the invention are described in further detail below by way of example only with reference to the accompanying drawings, which show:
- figure 1, a schematic view illustrating the main components of a system according to the invention; and
- figure 2, a block diagram showing some steps of a method according to the invention.

### Detailed description of the invention

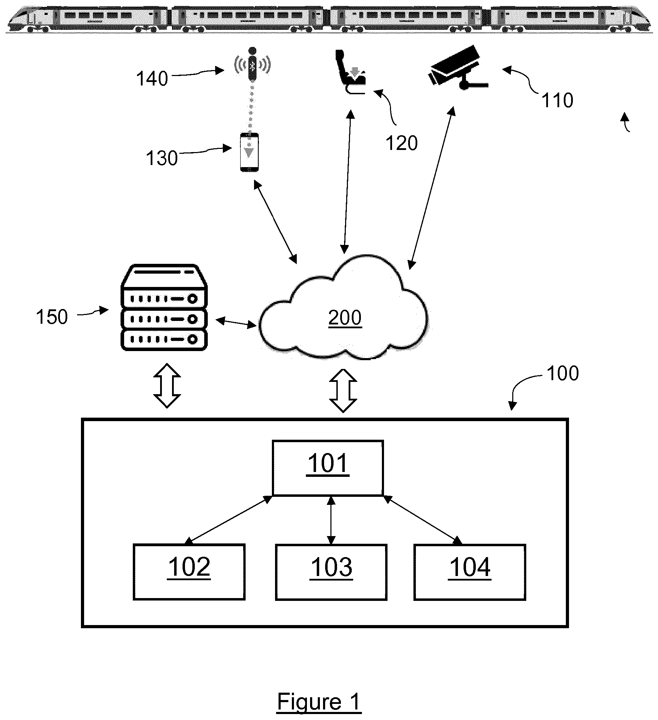

As illustrated in Figure 1, the system 100 for determining loading data in connection with a load supported by a transportation vehicle according to the invention comprises an information processing unit 101, comprising one or more processors, a data storage medium 102, input and output means 103 and, optionally, display means 104. According to some embodiments, the system 100 comprises one or more computers, one or more servers, one or more supercomputers and/or any combination comprising one of these computer systems. Preferably, the information processing unit 101 consists of a computer or a server provided with one or more communication interfaces and one or more pieces of software specifically designed and configured for carrying out the tasks and the steps described below.

In relation to some steps of the method according to the invention, the system 100 interacts, via a communication channel 200 that preferably includes a mobile communication network (e.g. GSM, 3G, 4G, 5G), with a first type of detection means 110. Preferably, the detection means 110 include at least one detection device, preferably a stereoscopic camera and/or an infrared sensor, and means for interpreting signals generated by such detection device and for generating data accordingly. Preferably, the detection means 110 are arranged in the transportation vehicle and communicate directly with the system 100 via the communication channel 200. Alternatively, or cumulatively, the detection means 110 are connected to an intermediate data processing system arranged in the vehicle (not represented), for instance a computer, which includes the means for interpreting signals generated by the detection device, generates data when the detection device of the detection means 110 generates a signal and transmits the generated data to the system 100. Alternatively, or cumulatively, data generated either by the detection means 110 or by the intermediate data processing system may be stored in a data storage medium arranged in the vehicle (not represented).

Similarly, in relation to other steps of the method according to the invention, the system 100 interacts, via the communication channel 200, with a second type of detection means 120. Preferably, the detection means 120 comprises a sensor, for instance a pressure sensor arranged with respect to a seat placed in the vehicle, and means for interpreting signals generated by the sensor and for generating data accordingly. Preferably, the detection means 120 are arranged in the transportation vehicle and communicate directly with the system 100 via the communication channel 200. Alternatively, or cumulatively, the detection means 120 are also connected to the intermediate data processing system arranged in the vehicle (not represented), which includes the means for interpreting signals generated by the sensor, generates data when the sensor of the detection means 120 generates a signal and transmits the generated data to the system 100. Alternatively, or cumulatively, data generated either by the detection means 120 or by the intermediate data processing system may also be stored in the data storage medium arranged in the vehicle (not represented).

Additionally, in relation to other steps of the method according to the invention, the system 100 interacts, via a communication channel 200, with mobile devices 130, for instance smartphones. The system 100 is thus able to send data to the mobile devices 130 and to receive data from them. This is particularly advantageous because some steps of the method according to the invention rely on data that is determined by means of functionalities implemented by additional components of the system 100 (not represented) bundled in an application which is hosted in each mobile device 130 and executed either punctually or continuously. Accordingly, when performing certain steps in accordance with these additional components, the mobile devices 130 interact with one or more beacons 140 arranged in the transportation vehicle by means of radiofrequency signals, preferably generated according to one of the Bluetooth standard protocols. Likewise, all beacons 140 are also compatible with the Bluetooth technology, that is they are all adapted for generating radiofrequency signals in accordance with one of the Bluetooth standard protocols. Preferably, the steps implemented by the mobile devices 130 in accordance with the additional components of the system 100 include at least a step of determining identification data of a closest beacon by performing measurements of the power of radiofrequency signals received from several beacons 140, and a step of transmitting this identification data to the system 100.

Moreover, in relation to other steps of the method according to particular embodiments of the invention, the system 100 interacts with a data storage facility 150, local or remote, either directly or via the communication channel 200. Accordingly, the system 100 may retrieve and extract data stored on the data storage facility 150.

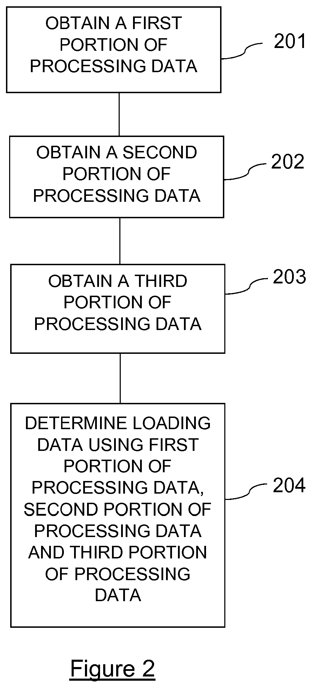

All the elements described above contribute to enable the system 100 to implement the method for determining loading data in connection with a load supported by a transportation vehicle, as described below in relation to figure 2.

In a step 201, the system 100 obtains, i.e. retrieves, extracts and/or determines, a first portion of processing data. Preferably, the first portion of processing data is generated when the detection device of the detection means 110 generates a signal. Then, it is stored on the data storage medium 102 upon receipt by the system 100. As previously mentioned, data may be generated either by the detection means 110 themselves or by the intermediate data processing system arranged in the vehicle which interprets the signals generated by the detection device of the detection means 110 and generates data accordingly. Alternatively, the first portion of processing data is retrieved by the system 100 from the data storage medium arranged in the vehicle on which it is stored either by the detection means 110 or by the intermediate data processing system arranged in the vehicle.

In a step 202, the system 100 obtains a second portion of processing data. Preferably, the second portion of processing data is generated when a detection device of the detection means 120 generates a signal. As previously mentioned, data may be generated either by the detection means 120 themselves or by the intermediate data processing system arranged in the vehicle which interprets the signals generated by the detection device of the detection means 120 and generates data accordingly. Alternatively, the first portion of processing data is retrieved by the system 120 from the data storage medium arranged in the vehicle on which it is stored either by the detection means 120 or by the intermediate data processing system arranged in the vehicle.

In a step 203, the system 100 obtains a third portion of processing data. Preferably, a part of the third portion of processing data is generated by the system 100 when a radiofrequency signal transmitted by a mobile device 130 is received. As previously mentioned, data received from mobile devices 130 may include identification data of closest beacons. Alternatively, the third portion of processing data may be generated by the mobile devices 130 themselves and stored on the data storage medium 102 upon receipt by the system 100.

In a step 204, the system 100 determines said loading data by using the first portion of processing data, the second portion of processing data and the third portion of processing data. To this end, the system 100 implements at least a step of reviewing the portions of data and a step of determining elements which are relevant in relation to the loading status of the transportation vehicle.

The system 100 performs an additional step during which obtains a fourth portion of processing data. The fourth portion of processing data is stored in the data storage facility 150. The fourth portion of processing data concerns elements which are also relevant with respect to the loading status of the transportation vehicle, More specifically, the fourth portion of processing data includes data generated in relation to equipment operating in relation to suspension means of the transportation vehicle. Then, the fourth portion of processing data is used by the system 100 to update the loading data that has been determined.

Thus, according to the system and the method according to the present invention described above, necessary components are made available for providing functionalities allowing loading data in connection to a load supported by a transportation vehicle to be more accurately determined.

## Claims

1. A method for determining by a computer system (100) loading data in connection with a load supported by a transportation vehicle, said method comprising the steps of:
- obtaining a first portion of processing data, said first portion of processing data being generated when at least one first detection device of detection means of a first type (110) arranged in said vehicle generates a signal,
- obtaining a second portion of processing data, said second portion of processing data being generated when at least one second detection device of detection means of a second type (120) arranged in said vehicle generates a signal,
- obtaining a third portion of processing data, said third portion of processing data being generated when a radiofrequency signal transmitted by a mobile device (130) is received,
- determining said loading data by using said first portion of processing data, said second portion of processing data and said third portion of processing data,
- obtaining a fourth portion of processing data, said fourth portion of processing data being stored on a remote data storage facility (150), wherein the fourth portion of processing data includes data generated in relation to equipment operating in relation to suspension means of the transportation vehicle, and
- updating said loading data by using said fourth portion of processing data.

2. The method according to claim 1, **characterized in that** said mobile device (130) is configured to pair with a beacon (140) arranged in said vehicle.

3. The method according to one of the preceding claims, **characterized in that** said first detection device comprises a stereoscopic camera and/or an infrared sensor.

4. The method according to one of the preceding claims, **characterized in that** said second detection device comprises a pressure sensor arranged with respect to a seat placed in said vehicle.

5. A system (100) for determining loading data in connection with a load supported by a transportation vehicle, **characterized in that** said system comprises at least one information processing unit (101), comprising one or more processors, and a data storage medium (102) which are configure to carry out the steps of a method according to one of the preceding claims.

6. Computer program comprising instructions for carrying out the steps of a method according to claims 1 to 4.

7. Medium which can be used in a computer and on which a program according to claim 6 is recorded.

## Patentansprüche

1. Verfahren zum Bestimmen von Ladedaten in Verbindung mit einer durch ein Transportfahrzeug getragenen Ladung durch ein Computersystem (100), das Verfahren umfassend die Schritte:
- Erhalten eines ersten Teils von Verarbeitungsdaten, wobei der erste Teil der Verarbeitungsdaten erzeugt wird, wenn mindestens eine erste Erfassungsvorrichtung von Erfassungsmitteln einer ersten Art (110), die in dem Fahrzeug angeordnet sind, ein Signal erzeugt,
- Erhalten eines zweiten Teils der Verarbeitungsdaten, wobei der zweite Teil der Verarbeitungsdaten erzeugt wird, wenn mindestens eine zweite Erfassungsvorrichtung von Erfassungsmitteln einer zweiten Art (120), die in dem Fahrzeug angeordnet sind, ein Signal erzeugt,
- Erhalten eines dritten Teils der Verarbeitungsdaten, wobei der dritte Teil der Verarbeitungsdaten erzeugt wird, wenn ein durch eine mobile Vorrichtung (130) gesendetes Hochfrequenzsignal empfangen wird,
- Bestimmen der Ladedaten durch Verwenden des ersten Teils der Verarbeitungsdaten, des zweiten Teils der Verarbeitungsdaten und des dritten Teils der Verarbeitungsdaten,
- Erhalten eines vierten Teils der Verarbeitungsdaten, wobei der vierte Teil der Verarbeitungsdaten in einer Ferndatenspeichereinrichtung (150) gespeichert wird, wobei der vierte Teil der Verarbeitungsdaten Daten einschließt, die in Bezug auf eine Ausrüstung erzeugt werden, die in Bezug auf eine Aufhängungseinrichtung des Transportfahrzeugs betrieben wird, und
- Aktualisieren der Ladedaten durch Verwenden des vierten Teils der Verarbeitungsdaten.

2. Verfahren nach Anspruch 1, **dadurch gekennzeichnet, dass** die mobile Vorrichtung (130) konfiguriert ist, um mit einem in dem Fahrzeug angeordneten Beacon (140) zu koppeln.

3. Verfahren nach einem der vorstehenden Ansprüche,
**dadurch gekennzeichnet, dass** die erste Erfassungsvorrichtung eine Stereokamera und/oder einen Infrarotsensor umfasst.

4. Verfahren nach einem der vorstehenden Ansprüche,
**dadurch gekennzeichnet, dass** die zweite Erfassungsvorrichtung einen Drucksensor umfasst, der in Bezug auf einen in dem Fahrzeug platzierten Sitz angeordnet ist.

5. System (100) zum Bestimmen der Ladedaten im Zusammenhang mit einer durch ein Transportfahrzeug getragenen Ladung, **dadurch gekennzeichnet, dass** das System mindestens eine Informationsverarbeitungseinheit (101), umfassend einen oder mehrere Prozessoren, und ein Datenspeichermedium (102) umfasst, die konfiguriert sind, um die Schritte eines Verfahrens nach einem der vorstehenden Ansprüche auszuführen.

6. Computerprogramm, umfassend Anweisungen zum Ausführen der Schritte eines Verfahrens nach den Ansprüchen 1 bis 4.

7. Medium, das in einem Computer verwendbar ist und auf dem ein Programm nach Anspruch 6 aufgezeichnet ist.

## Revendications

1. Procédé de détermination par un système informatique (100) de données de chargement en rapport avec une charge supportée par un véhicule de transport, ledit procédé comprenant les étapes consistant à :
- obtenir une première partie de données de traitement, ladite première partie de données de traitement étant générée lorsqu'au moins un premier dispositif de détection d'un moyen de détection d'un premier type (110) agencé dans ledit véhicule génère un signal,
- obtenir une deuxième partie de données de traitement, ladite deuxième partie de données de traitement étant générée lorsqu'au moins un second dispositif de détection d'un moyen de détection d'un second type (120) agencé dans ledit véhicule génère un signal,
- obtenir une troisième partie de données de traitement, ladite troisième partie de données de traitement étant générée lorsqu'un signal de radiofréquence transmis par un dispositif mobile (130) est reçu,
- déterminer lesdites données de chargement en utilisant ladite première partie de données de traitement, ladite deuxième partie de données de traitement et ladite troisième partie de données de traitement,
- obtenir une quatrième partie de données de traitement, ladite quatrième partie de données de traitement étant stockée sur une installation de stockage de données à distance (150), dans lequel la quatrième partie de données de traitement comporte des données générées en relation avec un équipement fonctionnant en relation avec un moyen de suspension du véhicule de transport, et
- mettre à jour lesdites données de chargement en utilisant ladite quatrième partie de données de traitement.

2. Procédé selon la revendication 1, **caractérisé en ce que** ledit dispositif mobile (130) est configuré pour s'associer avec une balise (140) agencée dans ledit véhicule.

3. Procédé selon l'une quelconque des revendications précédentes,
**caractérisé en ce que** ledit premier dispositif de détection comprend une caméra stéréoscopique et/ou un capteur infrarouge.

4. Procédé selon l'une quelconque des revendications précédentes,
**caractérisé en ce que** ledit second dispositif de détection comprend un capteur de pression agencé par rapport à un siège placé dans ledit véhicule.

5. Système (100) permettant de déterminer des données de chargement en rapport avec une charge supportée par un véhicule de transport,
**caractérisé en ce que** ledit système comprend au moins une unité de traitement d'informations (101), comprenant un ou plusieurs processeurs, et un support de stockage de données (102) qui sont configurés pour réaliser les étapes d'un procédé selon l'une des revendications précédentes.

6. Programme informatique comprenant des instructions pour la réalisation des étapes d'un procédé selon les revendications 1 à 4.

7. Support qui peut être utilisé dans un ordinateur et sur lequel un programme selon la revendication 6 est enregistré.
